Europäisches Patentamt

European Patent Office

Office européen des brevets

(19)

(11) Publication number: **0 307 215 B1**

## EUROPEAN PATENT SPECIFICATION

(12)

(45) Date of publication of patent specification: **12.01.94**  (51) Int. Cl.⁵: **B29C 53/66**, B29C 53/84

(21) Application number: **88308338.8**

(22) Date of filing: **09.09.88**

---

(54) **Apparatus and method for winding a plurality of lengths of thermoplastic resin impregnated yarns and products thereof.**

---

(30) Priority: **11.09.87 US 95235**

(43) Date of publication of application:
**15.03.89 Bulletin 89/11**

(45) Publication of the grant of the patent:
**12.01.94 Bulletin 94/02**

(84) Designated Contracting States:
**AT BE CH DE ES FR GB GR IT LI LU NL SE**

(56) References cited:
**EP-A- 0 116 833**
**EP-A- 0 265 915**
**WO-A-84/00351**
**DE-B- 1 086 880**
**FR-A- 2 118 243**

**PLASTVERARBEITER, vol. 39, no. 5, May 1988, pages 48,49,52,53,54,57,58,60,61,62,64,65, Speyer, DE; K. BORGSCHULTE et al.: "Faserwickeln mit Prepregs und GMT-Verarbeitung"**

(73) Proprietor: **E.I. DU PONT DE NEMOURS AND COMPANY**
**1007 Market Street**
**Wilmington Delaware 19898(US)**

(72) Inventor: **Gruber, Mark Brian**
**5 Yeager Lane**
**Landenberg Pennsylvania 19350(US)**

(74) Representative: **Jones, Alan John et al**
**CARPMAELS & RANSFORD**
**43 Bloomsbury Square**
**London, WC1A 2RA (GB)**

---

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.9/3.3.3)

EP 0 307 215 B1

## Description

This invention relates to winding fiber-reinforced resin products, and more particularly it relates to winding a plurality of lengths of thermoplastic resin impregnated yarns to form an insitu consolidated product.

Equipment for winding single length thermoplastic resin impregnated yarn on a mandrel is known. However, fabrication of parts in this manner is slow and costly because only one impregnated length of yarn is wound at low speed. When scale-up has been attempted, the control of multiple lengths of such yarns during winding at higher speeds presented barriers because heating the resin to its melt temperature during winding caused sticking of the polymer to guides, loss of control of band width and fuzzing of the yarn. This resulted in unacceptable operability as well as broken filaments which gave poor mechanical properties. In addition, the inability to get enough heat into a multi-end system to melt the polymer always produced parts with an unacceptable level of voids unless the product was subject to a post heating treatment. Furthermore, these limitations have deprived end users of the lower cost improved products which could be obtained from thermoplastic resin impregnated yarn.

FR-A-2118343 discloses a process for the production of a receptacle from thermoplastic resin, wherein reinforcing filaments or fibres are prepared, the filaments or fibres are coated with thermoplastic resin preferably PVC, the resin is heated to close to its melting temperature, the filaments are wound with contiguous turns onto a mould, the wound filaments are cooled, and the resulting receptacle is demoulded. Also disclosed is an apparatus for the performance of the process comprising a mandrel driven by a shaft borne by a turret, and at least one distributor of coated filaments or fibres which is disposed laterally in relation to the mandrel and is displaced axially simultaneously with the rotation of the mandrel.

This invention is concerned with a method of building and consolidating a composite structure from a plurality of tows of thermoplastic resin reinforced with yarn. The method comprises advancing a plurality of lengths of said tows under tension from a source of supply to a laydown location on a rotating mandrel at speeds of 25 ft./min. (7.62 m/min.) and above; guiding said lengths in a helical path by means of a circular eye guide axially traversing said mandrels to form said structure, said lengths advancing from said source to heat said lengths from above the melt temperature of the thermoplastic resin to below the degradation temperature of the thermoplastic resin, and thereafter through said guide. The guide is heated to a temperature of from above the melt temperature to below the degradation temperature of said thermoplastic resin, whereby said thermoplastic resin does not stick to said circular eye guide and said yarn does not fuzz after passing through said circular eye guide at winding speeds of 25 ft./min. (7.62 m/min.) and above. Thereafter the surface of said structure at said laydown location is heated with a third heating source to ensure molten mating surfaces at said laydown location.

Also this invention concerns an apparatus for winding thermoplastic resin impregnated yarns on a rotating mandrel at speeds of 25 ft./min. (7.62 m/min.) and above comprising: a source of a plurality of said thermoplastic resin impregnated yarns; and means for tensioning said yarns; and a carriage having a circular eye guide thereon through which said yarns pass for traversing said yarns back and forth on the mandrel to wind a product. There are means associated with said guide to heat said guide to a temperature above the melt temperature but below the degradation temperature of said thermoplastic resin and means for maintaining the temperature of said resin as said thermoplastic resin impregnated yarns pass from said guide until said yarns reach said mandrel whereby the thermoplastic resin does not stick to said guide and said yarn does not fuzz after passing through said guide at winding speeds of 25 ft./min. (7.62 m/min.) and above.

Thus, an *in situ* consolidated composite structure (i.e., the ability to consolidate the structure during winding of the structure without the need of consolidation processing after winding) is built from a plurality of lengths of thermoplastic resin impregnated yarns wound simultaneously on a mandrel wherein multiple ends of such yarns are fed under controlled tension in the range of 5% to 50% of the ultimate tensile strength of the yarn from a supply source to a traversing carriage of a filament winder as a flat uniform tape. This tape then moves through the "head" portion of the filament winder containing a preheating section, a heated guide, and a contact point heating source before being laid down in a predetermined helical or geodesic path on a rotating mandrel.

The head of the filament winder is mounted on the end of the carriage feed arm which can move in and out compensating for changes in cross-section of the rotating mandrel. Infra-red (IR) strip heaters are mounted on the head to preheat the multi-end impregnated yarn and are designed in length and intensity to bring the thermoplastic resin to within ±10°C of its melt or processing temperature. The pre-heated impregnated yarn then passes across a heated guide that is maintained at a temperature above the melt temperature but below the degradation temperature of the thermoplastic resin, and located as close as possible to the surface of the part being wound. The heating of the guide is critical to preventing polymer and fiber buildup on its surface, and the location is critical to maintaining impregnated yarn temperature until the impregnated yarn reaches the laydown point.

Mounted at the forward most portion of the head is a contact point heating source which maintains the surface temperature of the part high enough, through induced heating of the mandrel and direct heating of the wound surface, to ensure molten mating surfaces at the laydown point of the incoming lengths of impregnated yarn. Hot air, open flame, and IR contact point heating sources may be used. The selection of which source to use is dependent on the yarn, the thermoplastic resin, the mandrel design, and operating speed.

Upon completion of the winding process all heat sources are removed and the part is allowed to cool. After reaching room temperature the part may easily be extracted from the mandrel and an insitu consolidated part with less than 6% void content requiring no post-consolidation steps results.

Brief Description of the Drawings

Figure 1 is a schematic side view of a winding apparatus for practicing the invention.
Fig. 2 is a schematic side view of an alternate embodiment of Fig. 1.
Fig. 3 is a schematic side view of another embodiment of Fig. 1.
Fig. 4 is a side view of the head of the winding apparatus shown schematically in Fig. 1.
Figs. 5 and 6 are side and front views respectively of the head of the winding apparatus shown schematically in Fig. 2.

Detailed Description of the Illustrated Embodiments

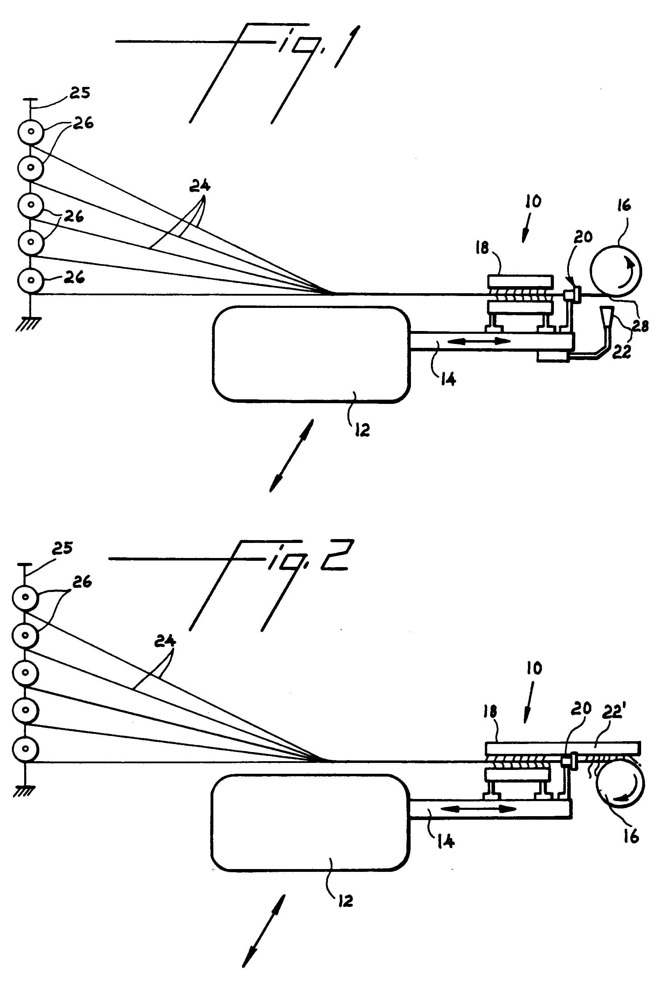

In Figs. 1-3, the yarn-laying head used in practicing the invention is generally designated by the numberal 10 and is shown to include a traversing carriage 12 upon which is mounted a feed arm 14 movable toward and away from a rotating mandrel 16. The traversing carriage, feed arm, and mandrel are a model W60-16 triple axis filament winder with and N-210 computer by McClean Anderson of Milwaukee, Wis. Mounted to the feed arm 14 are infra-red heaters 18, a heated guide 20 and an open flame heater 22 (Fig. 1).

As carriage 12 is traversed longitudinally of mandrel 16 a plurality of lengths of thermoplastic resin impregnated yarns 24 are pulled from a plurality of supply packages 26 mounted on rolling takeoff creel 25 against a desired level of back tension (in the range of 5% to 50% of the ultimate tensile strength of the tape) applied by a mechanism (not shown) associated with the creel for controlling unwind tension on packages 26 such as a Type 800CO12 tension compensator by Compensating Tension Controls, Inc., of West Caldwell, New Jersey.

As the yarn-laying head moves with respect to the structure wound on mandrel 16, the thermoplastic resin impregnated lengths of yarn 24 are exposed to radiant heaters 18 (model 5535 manufactured by Research Inc. of Minneapolis, Minesota). In these heaters, the thermoplastic resin is heated to a temperature that is within 10°C of its melt temperature. The lengths of yarn then pass through a heated guide 20 which in the preferred embodiment is a circular eye made of aluminum with a hard anodized finish coated with teflon. The guide is wrapped with an electrically operated band heater 20a (such as an MI band heater model MBIEIJNI) which raises the temperature of the thermoplastic to a temperature above its melting point but below its degradation temperature which should be understood to be below the melting point of the reinforcing fibers. Mounted at the forward end of feed arm 14 is an open flame heater 22 (a Vulcan Universal propane torch with a No. 3 tip) over which the tapes 24 pass to the laydown location 28 on the mandrel 16. This heater heats the surface of the part being wound on the mandrel, through induced heating of the mandrel and direct heating of lengths of yarn 24 as they travel from the guide 20 to location 28 ensure molten mating surfaces at laydown location 28.

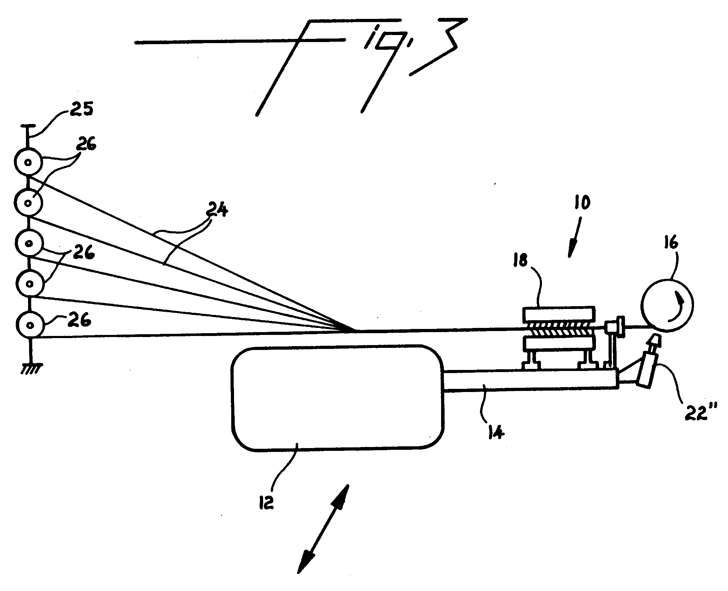

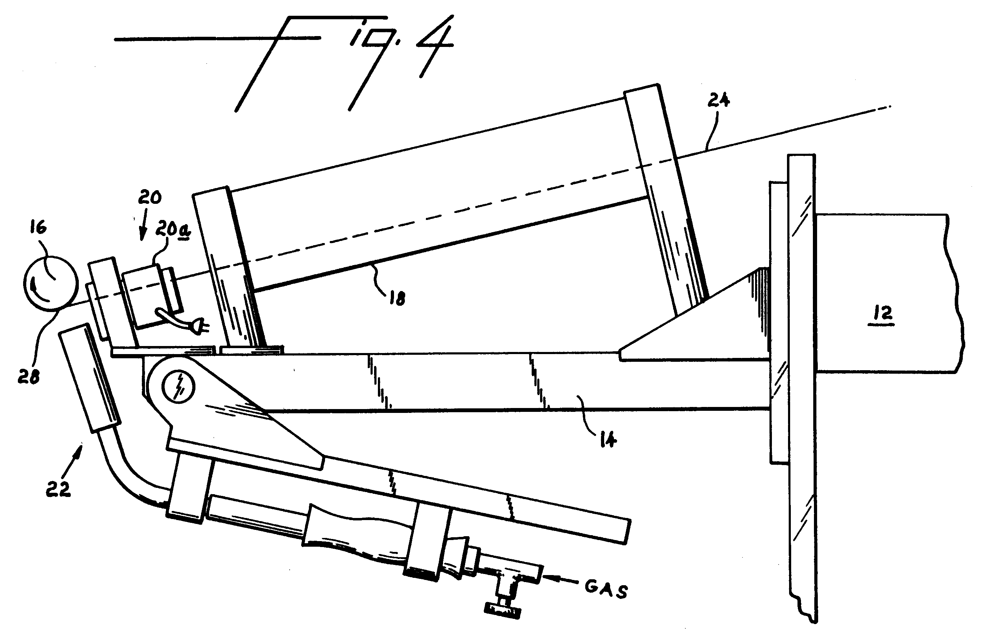

In Fig. 2 the open flame heater 22 is replaced with an infra-red heater 22' (model 5535 by Research Inc.), and in Fig. 3 flame heater 22 is replaced with a hot air gun heater 22″ (Serpentine VI model CHE128767 by Sylvania).

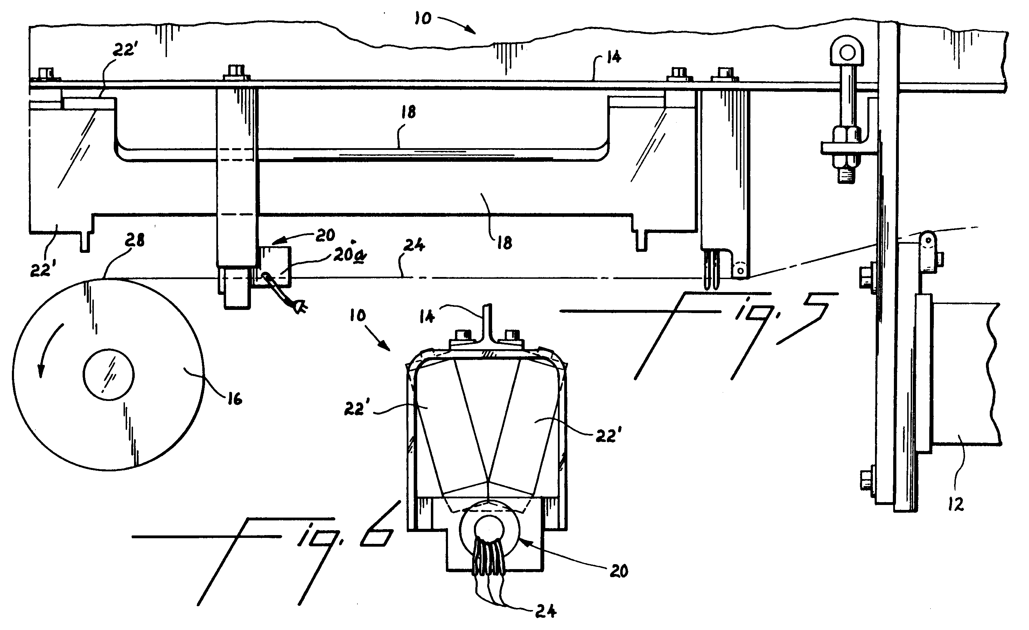

Figs. 4, 5 and 6 show the physical relationship of the tapes, the heaters and heated guide on the head of the filament winder with respect to each other and the mandrel.

Void Content

To determine void content in a composite sample, the density of the sample must be measured and the density of a zero void sample must be calculated. From these two numbers, the void content of the sample can be determined.

Measurement of sample density:

The density of the samples were measured using ASTM D 792-66 standard test method. The following procedures were followed:

1) Weigh sample in air (a)
2) Weigh sample in water (b)
3) Calculate the specific gravity (s.g.) of the sample s.g. = a/(a-b)
4) Calculate the density of the sample

Measured density = s.g. x density of water at the measurement temperature.

Theoretical density for a sample with no voids:

$$Dc = (Df \times Vf) + (Dm \times Vm)$$

where:

| | |
|---|---|
| Dc | = density of the composite |
| Df | = density of the fiber |
| Dm | = density of the matrix |
| Vf | = fiber volume |
| Vm | = matrix volume |

Calculate the % void content:

$$\% \text{ voids} = \frac{(\text{Theoretical density} - \text{measured density})}{\text{theoretical density}} \times 100$$

Example I

A tow of Owen Corning's Type 30 continuous glass filaments having approximately 620 denier and 2000 filaments is coated with PETG thermoplastic polymer (a copolymer manufactured by Eastman Kodak Company) using a melt-injection process (as described in U.S. patent 4,640,861) to approximately 50% by volume coating level. Four bobbins of the coated tow of these glass filaments are mounted on a rolling take-off creel equipped with a mechanism for controlling unwind tension (Type 800CO12 Tension Compensator made by Compensating Tension Controls, Inc.) The tow is advanced at 30 ft/min by means of a rotating mandrel downstream and a tension of approximately 3500 gm is applied to the moving tow by the tension compensator. The moving tow passes through the "head" portion of the downstream filament winder which contains 1) a pre-heating section (heated with an infrared heater) which heats the tow to 260°C followed by 2) a guide-eye which is preheated to 200°C with bandheaters and 3) a hot air source which is positioned close to the rotating mandrel (6cm away) and maintains the temperature of the tow at 200°C. The tow is finally laid down on an electrically heated mandrel (maintained at 250°C). The computer controlled winder is preprogrammed to provide a 12″ long tube with 45° winding angle. After completing the winding, the mandrel and the tube are cooled for approximately 1 hour until the temperature of the part is about 100°C. The wound tube is then removed, cut-up and tested for void content.

The filament winder used is a commercial winder made by McClean Anderson Model No. W-60 which was modified to adapt to this work as follows:

- The thermostat resin bath was removed,
- The thermoplastic head was mounted on the cross feed and power, water and N2 was supplied to the carriage for a thermoplastic head.

The void content of the tube was 4.8%.

4

Example II

A tow of Hercules AS4 continuous graphite filaments having approximately 3000 filaments is coated with a certain amorphous copolyamide polymer (as described in U.S. Patent 4,681,411) using a melt-injection process (as described in U.S. Patent 4,640,861) to approximately 50% by volume coating level.

Two bobbins of the coated tow of these graphite filaments are mounted on two rolling take-off creels equipped with a mechanism for controlling unwind tension (Type 800C 012 Tension Compensator made by Compensating Tension Controls, Inc.). The tow is advanced at 25 ft/min by means of a rotating mandrel downstream and a tension of approximately 1500 gm is applied to each moving tow by the tension mechanism. The moving tow passes through the "head" portion of the downstream filament winder which contains: 1) A pre-heating section (heated with an infrared heater) which heats the tow to 320°C following by, 2) A guide eye which is preheated to 320°C with band heaters and, 3) An infrared heating source which is positioned close to the rotating mandrel (3 cm away) and maintains the temperature of the yarn at 320°C. 4) The tow is finally laid down on an electrically heated mandrel (at 220°C).

Hot $N_2$ (320°C) was blown into the I.R. heat-up zone to reduce polymer degradation. The computer controlled winder is preprogrammed to produce a 6 ft long tube with ±45°/±5°/90°/±45°/90°/±45°/90° winding angles.

After completing the winding, the mandrel and the tube are cooled for approximately 1 hour until the temperature of the part is about 100°C. The wound part is removed and tested for void content. The void content was 2.5%.

**Claims**

1. A method of building and consolidating a composite structure from a plurality of tows of thermoplastic resin reinforced with yarn comprising: the steps of advancing a plurality of lengths of said tows under tension from a source of supply to a laydown location on a rotating mandrel at speeds of 25 ft./min. (7.62 m/min.) and above; guiding said lengths in a helical path by means of a circular eye guide axially traversing said mandrels to form said structure, said lengths advancing from said source to heat said lengths from above the melt temperature of the thermoplastic resin to below the degradation temperature of the thermoplastic resin, thereafter through said guide; heating said guide to a temperature in a range of from above the melt temperature to below the degradation temperature of said thermoplastic resin, whereby said thermoplastic resin does not stick to said circular eye guide and said yarn does not fuzz after passing through said circular eye guide at winding speeds of 25 ft./min. (7.62 m/min.) and above; and heating said surface of said structure at said laydown location with a third heating source to ensure molten mating surfaces at said laydown location.

2. A method according to claim 1 wherein the guide is heated by means of an electrically energized band heater wrapped around said guide.

3. A method according to either of claims 1 and 2 wherein said yarn is advanced under a tension of from about 5 percent to about 50 percent of its ultimate breaking strength.

4. An apparatus for winding thermoplastic resin impregnated yarns on a rotating mandrel at speeds of 25 ft./min. (7.62 m/min.) and above comprising: a source of a plurality of said thermoplastic resin impregnated yarns; means for tensioning said yarns; a carriage having a circular eye guide thereon through which said yarns pass for traversing said yarns back and forth on the mandrel to wind a product; means associated with said guide to heat said guide to a temperature above the melt temperature but below the degradation temperature of said thermoplastic resin and means for maintaining the temperature of said resin as said thermoplastic resin impregnated yarns pass from said guide until said yarns reach said mandrel whereby the thermoplastic resin does not stick to said guide and said yarn does not fuzz after passing through said guide at winding speeds of 25 ft./min. (7.62 m/min.) and above.

5. The apparatus according to claim 4 wherein said means for heating said guide comprises an electrically operated band heater wrapped around said guide.

**Patentansprüche**

1. Verfahren zum Erstellen und Verfestigen eines Verbundgebildes aus einer Mehrzahl von Kabeln aus thermoplastischem Harz verstärkt mit Garn, welches die folgenden Schritte aufweist: Weiterbewegen einer Mehrzahl von Längsstücken der Kabel unter Spannung von einer Aufgabequelle zu einer Ablagestelle auf einem sich mit Geschwindigkeiten von 25 ft./min. (7,62 m/min) und größer drehenden Dorn; Führen der Längsstücke auf einer spiralförmigen Bahn mit Hilfe einer kreisförmigen Ösenführung, welche sich axial in Längsrichtung der Dorne bewegt, um das Gebilde zu bilden, wobei die Längsstücke bei der Weiterbewegung von der Aufgabequelle von oberhalb der Schmelztemperatur des thermoplastischen Harzes bis unterhalb der Zersetzungstemperatur des thermoplastischen Harzes anschließend beim Durchgang durch die Führung erwärmt werden; Erwärmen der Führung auf eine Temperatur in einem Bereich von oberhalb der Schmelztemperatur bis unterhalb der Zersetzungstemperatur des thermoplastischen Harzes, wobei das thermoplastische Harz nicht an der kreisförmigen Ösenführung haftet und das Garn keine Fusseln bildet, nachdem es durch die kreisförmige Ösenführung mit Wicklungsgeschwindigkeiten von 25 ft./min. (7,62 m/min) und darüber gegangen ist; und Erwärmen der Oberfläche des Gebildes an der Ablagestelle mittels einer dritten Wärmequelle, um erschmolzene Paßflächen an der Ablagestelle sicherzustellen.

2. Verfahren nach Anspruch 1, bei dem die Führung mit Hilfe einer elektrisch betriebenen Bandheizeinrichtung erwärmt wird, welche um die Führung gewickelt ist.

3. Verfahren nach einem der Ansprüche 1 und 2, bei dem das Garn unter einer Spannung ausgehend von etwa 5 % bis etwa 50 % der Endbruchfestigkeit weiterbewegt wird.

4. Vorrichtung zum Wickeln von mit thermoplastischem Harz imprägnierten Garnen auf einem sich mit Geschwindigkeiten von 25 ft./min. (7,62 m/min) und größer drehenden Dorn, welche aufweist: Eine Quelle für eine Mehrzahl von mit thermoplastischem Harz imprägnierten Garnen; eine Einrichtung zum Spannen der Garne; einen Schlitten, welcher darauf eine kreisförmige Ösenführung hat, durch die die Garne zur Ausführung einer Bewegung in Längsrichtung der Garne vor und zurück auf dem Dorn zum Wickeln eines Erzeugnisses gehen; eine Einrichtung, welche der Führung zugeordnet ist, um die Führung auf eine Temperatur von oberhalb des Schmelzpunktes aber unterhalb der Zersetzungstemperatur des thermoplastischen Harzes zu erwärmen und eine Einrichtung zum Aufrechterhalten der Temperatur des Garnes, wenn die mit thermoplastischem Harz imprägnierten Garne die Führung passieren, bis die Garne den Dorn erreichen, wodurch das thermoplastische Harz nicht an der Führung haftet und das Garn keine Fusseln bildet, nachdem es durch die Führung mit Wicklungsgeschwindigkeiten von 25 ft./min. (7,62 m/min) und größer gegangen ist.

5. Vorrichtung nach Anspruch 4, bei der die Einrichtung zur Erwärmung der Führung eine elektrisch betriebene Bandheizeinrichtung aufweist, welche um die Führung gewickelt ist.

**Revendications**

1. Un procédé de construction et de consolidation d'une structure composite, constituée d'une pluralité de câbles de résine thermoplastique renforcée de fils, comprenant les étapes consistant : à faire avancer une pluralité de longueurs desdits câbles, tendus, depuis une source d'alimentation, vers un emplacement de dépôt sur un mandrin en rotation à des vitesses de 25 pieds/min (7,62 m/min) et plus ; à guider lesdites longueurs dans un passage hélicoïdal au moyen d'un guide formant oeillet circulaire, traversant ledit mandrin dans le sens axial, pour former ladite structure, lesdites longueurs avançant depuis ladite source, afin de porter lesdites longueurs d'une température supérieure à la température de fusion de la résine thermoplastique à une température inférieure à la température de dégradation de la résine thermoplastique, puis à travers ledit guide ; à porter ledit guide à une température située dans une plage comprise entre une température supérieure à la température de fusion et une température inférieure à la température de dégradation de ladite résine thermoplastique, ladite résine thermoplastique n'adhérant pas audit guide formant oeillet circulaire et ledit fil ne s'effilochant pas après être passé à travers ledit guide formant oeillet circulaire, à des vitesses d'enroulement de 25 pieds/min (7,62 m/min) et plus ; et à chauffer ladite surface de ladite structure située sur l'emplacement de dépôt, avec une troisième source de chauffage, afin de s'assurer du raccordement par fusion des surfaces, sur l'emplacement de dépôt.

**2.** Un procédé selon la revendication 1, dans lequel le guide est chauffé au moyen d'une bande chauffante alimentée en énergie électrique, enroulée autour dudit guide.

**3.** Un procédé selon l'une quelconque des revendications 1 ou 2, dans lequel le fil est entraîné sous tension comprise entre environ 5 pour-cent et environ 50 pour-cent de sa limite de rupture.

**4.** Un dispositif destiné à enrouler des fils imprégnés de résine thermoplastique sur un mandrin rotatif, à des vitesses de 25 pieds/min (7,62 m/min) et plus, comprenant : une source d'une pluralité desdits fils imprégnés de ladite résine thermoplastique ; des moyens destinés à tendre lesdits fils ; un support présentant un guide formant oeillet circulaire, à travers lequel passent lesdits fils, pour charioter lesdits fils en va-et-vient sur le mandrin, afin d'enrouler un produit ; des moyens associés audit guide pour porter ledit guide à une température supérieure à la température de fusion mais toutefois inférieure à la température de dégradation de ladite résine thermoplastique et des moyens destinés à maintenir la température de ladite résine lorsque lesdits fils imprégnés de ladite résine sortent dudit guide jusqu'à ce que les dits fils atteignent ledit mandrin et lesdits fils ne s'effilochent pas après avoir passé à travers ledit guide à des vitesses d'enroulement de 25 pied/min (7,62 m/min) et plus.

**5.** Le dispositif selon la revendication 4 dans lequel lesdits moyens destinés à chauffer ledit guide comprennent une bande chauffante alimentée électriquement, enveloppant ledit guide.

Fig. 1

Fig. 2

Fig. 3

EP 0 307 215 B1

Fig.4

Fig. 5

Fig. 6

EP 0 307 215 B1